# EUROPEAN PATENT SPECIFICATION

(11) **EP 1 461 232 B1**
(45) Date of publication and mention of the grant of the patent: **13.10.2010**
(21) Application number: 02792154.3
(22) Date of filing: 17.12.2002
(51) Int. Cl.: B60R 21/01, B60R 16/02, B60N 2/04

(54) **A SAFETY ARRANGEMENT**
SICHERHEITSANORDNUNG
SYSTEME DE SECURITE

(30) Priority: 03.01.2002 GB 0200084
(43) Date of publication of application: 29.09.2004
(73) Proprietor: AUTOLIV DEVELOPMENT AB, 447 00 Vargarda (SE)
(72) Inventor: VINCENT, Philippe, F-95690 Nesles la Vallée (FR); SABOURIN, Pierre, F-95520 Osny (FR)
(74) Representative: Barton, Matthew Thomas
(86) International application number: PCT/SE2002/002343
(87) International publication number: WO 2003/055726

(56) References cited:
- EP-A- 0 908 354
- GB-A- 2 327 914
- US-A- 5 696 409
- US-A- 5 890 779

## Description

**THE PRESENT INVENTION** relates to a safety arrangement, and more particularly relates to a safety arrangement in a motor vehicle.

It is becoming more usual for seats in a motor vehicle, particularly a multi-purpose vehicle (MPV) to be removably mounted in the vehicle so that the seats may be completely removed from the vehicle to provide a clear and unobstructed load-carrying space.

It is also becoming more common for vehicle seats to be provided with integral safety devices which are actuated or deployed in the event that an accident should occur. Thus a vehicle seat may now incorporate one or more air-bags, which are deployed to protect the occupant of the seat, and a pre-tensioner adapted to pre-tension the safety-belt. Also, a vehicle seat may now incorporate one or more sensors adapted to sense whether the seat is occupied, and possibly also to determine the weight of the occupant of the seat, with signals from those sensors being passed to a central processing unit so that the deployment of safety devices within the vehicle may be controlled in dependence upon signals from the sensors. Also, signals typically pass from diagnostic senses in the safety devices within the seat to a diagnostic arrangement provided in the vehicle, so that the diagnostic arrangement can ensure that the safety devices in the seat are all in an operable and functioning condition. The diagnostic sensors may determine the status or condition of the safety devices, and may determine, for example, the resistance of a squib resistor, or whether a buckle of a safety-belt has received a tongue.

It is thus clear that there is a need for a good communications link between a removable seat provided with such safety devices or sensors, and a central processing unit mounted within the vehicle, that communications link typically being required to pass signals from the sensors within the seat to the central processing unit, and from the central processing unit to the various safety devices which have to be actuated in the event that an accident should occur.

It is, of course, essential for the central processing unit to be able to determine whether the seat is, or is not, present. Thus the central processing unit must be able to determine whether the seat has been removed from the vehicle to provide load-carrying space. Also, in some vehicles, the central processing unit may need to be able to determine the direction of the seat, especially in a vehicle where the seat can be mounted in the vehicle in either a forward facing, or a rearward facing orientation. Additionally again the central processing unit may need to be able to determine the precise position of the seat, especially if the seat may be mounted on a longitudinal rail extending axially of the vehicle, with the seat being able to occupy a number of different positions.

Whilst all of these objectives can be achieved with an appropriate communications system if, due to an error in that communications system, communication between the seat and the central processing unit breaks down, the central processing unit may incorrectly determine that the seat is not present and then, in an accident situation, the central processing unit would not transmit signals to the seat to deploy the relevant safety devices.

EP-A-0 802 093 discloses a safety arrangement in a motor vehicle, the motor vehicle being provided with at least one seat which is removably mounted within the vehicle, the at least one seat having thereon at least one safety element in the form of a sensor the safety arrangement incorporating a communication channel having a part on the vehicle and a part on the seat providing communication between a control unit mounted on the vehicle to the safety element in the form of a sensor provided on the seat, in one alternative at least part of the communication channel may be provided as a wireless link, there being a first system for providing a signal to the control unit when the seat is present in the vehicle, the first system being constituted by the communication channel and there being an independent system, which is separate from the seat part of the communication channel, for determining the presence of the seat in the vehicle and for providing a signal indicative of the presence of the seat in the vehicle to the control unit. The safety arrangement also includes a vehicle occupant restraint system comprising a plurality of components or safety devices including an airbag (e.g. mounted on the vehicle dashboard) a sidebag and a seat belt pre-tensioner being adapted to be actuated in the event that an accident should occur. According to the safety arrangement according to D1 it is impossible to activate the occupant restraint system including the airbag and/or pre-tensioner if the seat is not present in the vehicle (i.e. erroneous deployment of a safety element is not possible).

GB-A-2 327 914 discloses a safety arrangement in a motor vehicle, the motor vehicle being provided with at least one seat which is removably mounted on elongate track units mounted in a vehicle, the at least one seat having thereon at least one safety element in the form of a safety device which is an airbag or a safety - belt pre - tensioner being adapted to be actuated in the event that an accident should occur, the safety arrangement incorporating a communication channel having a part on the vehicle which passes along one track unit and a part on the seat providing communication between a control unit mounted on the vehicle to the or each safety element provided on the seat, at least part of the communication channel being a wireless link, there being a first system for providing a signal to the control unit when the seat is present in the vehicle, the first system being constituted by the communication channel.

US5696409 discloses an apparatus for supplying electrical power to a vehicle seat.

EP0908354 discloses an apparatus for transmitting signals and/or power to an electrical device of a vehicle seat.

US5890779 discloses an apparatus for providing electrical communication between separate parts of a vehicle.

The present invention seeks to provide an improved safety arrangement.

According to this invention there is provided safety arrangement in a motor vehicle, the motor vehicle being provided with four separate elongate track units each extending axially of the vehicle and at least one seat which is removably mounted on two of said elongate track units within the vehicle, the at least one seat having thereon at least one safety element in the form of a safety device which is an airbag or a safety-belt pre-tensioner being adapted to actuated in the event that an accident should occur, the safety arrangement incorporating a first communication channel having a part on the vehicle and a part on the seat providing communication between a control unit mounted on the vehicle to the or each safety element provided on the seat, the first communication channel comprising an inductive wireless link formed by first co-operating coils provided on the seat and a first one of the track units respectively, there being a first system for providing a signal to the control unit when the seat is present in the vehicle, the first system being constituted by the first communication channel, and there being an independent system, comprising a supplementary communication channel which is separate from the seat part of the first communication channel, for determining the presence of the seat in the vehicle and for providing a signal indicative of the presence of the seat in the vehicle to the control unit, the supplementary communication channel comprising an inductive wireless link formed by second co-operative coils provided on the seat and a second one of the track units respectively, and wherein the control unit comprises means for determining the identity of the track which is providing communication through the communication channel, and the identity of the track which is providing communication through the supplementary channel.

Preferably, at least one safety device on the seat includes a diagnostic sensor, the diagnostic sensor being adapted to pass a signal to the control unit through the communication channel.

Advantageously, the seat includes at least one sensor adapted to sense the weight of an occupant of the seat.

Conveniently, the vehicle and seat are adapted for power to be transferred from the vehicle to the seat through the inductive coil.

Preferably, the seat incorporates a storage arrangement in which transferred power may be stored within the seat.

Advantageously, the arrangement incorporates an alarm signal generator adapted to be actuated if only one of said first system and said independent system provide a signal indicative of the presence of the seat.

In order that the invention may be more readily understood, and so that further features thereof may be appreciated, the invention will now be described, by way of example, with reference to the accompanying drawings in which:
FIGURE 1 is a diagrammatic view of part of a motor vehicle provided with removable seats, the view showing floor mounted track units, and seats mounted on those track units, illustrating schematically a communication system and a supplementary system,
FIGURE 2 is a diagrammatic view of one of the track units as shown in Figure 1,
FIGURE 3 is a block diagrammatic view used in explaining the invention, and
FIGURE 4 is a further block diagrammatic view illustrating an alternative arrangement, not according to the invention.

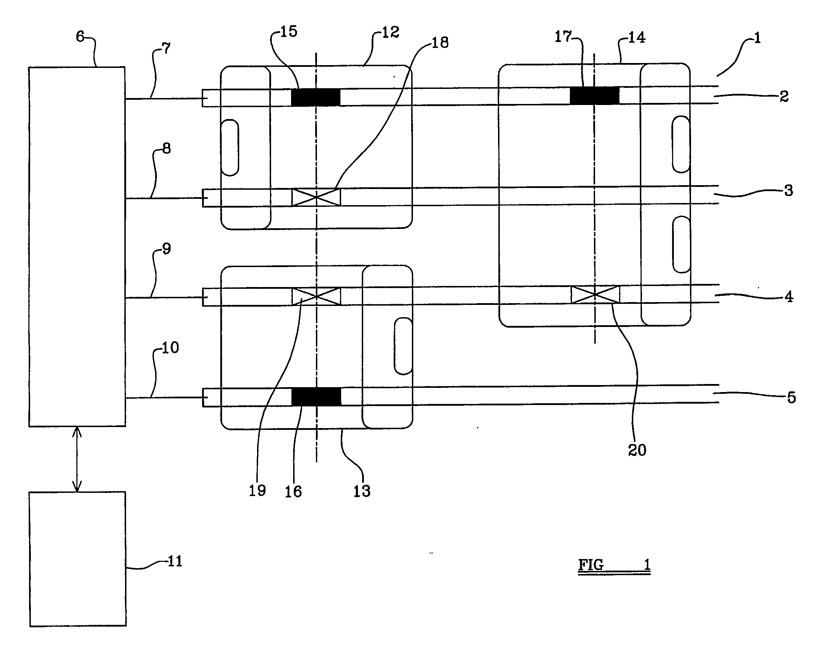

Referring initially to Figure 1, the floor 1 of a motor vehicle, such as a multi-purpose vehicle (MPV) is provided with four separate track units 2, 3, 4, 5, each extending axially of the vehicle. The track units thus extend in parallelism and are evenly spaced-apart. Each track unit is connected to a control unit 6 by an appropriate lead 7, 8, 9, 10, the control unit 6 being adapted, in this embodiment, to be mounted beneath the floor of the vehicle.

The control unit 6 is also connected to an air-bag unit 11 which may, for example, be an air-bag unit mounted in front of or beside one of the seats.

Figure 1 shows three seats 12, 13 and 14 removably mounted in position on the track units 2 to 5. The track units are such that each seat may adopt one of a plurality of predetermined positions spaced apart axially along the track units. Seat 12 is a single seat which is facing rearwardly of the vehicle, the seat 13 is a single seat facing forwardly of the vehicle, and the seat 14 is a double seat facing forwardly of the vehicle.

Each seat is provided with a communication element 15, 16, 17, which engages one track unit mounted on the floor, and a supplementary element 18, 19, 20 which engages another track unit Each seat has at least one safety element in the form of an active safety device.

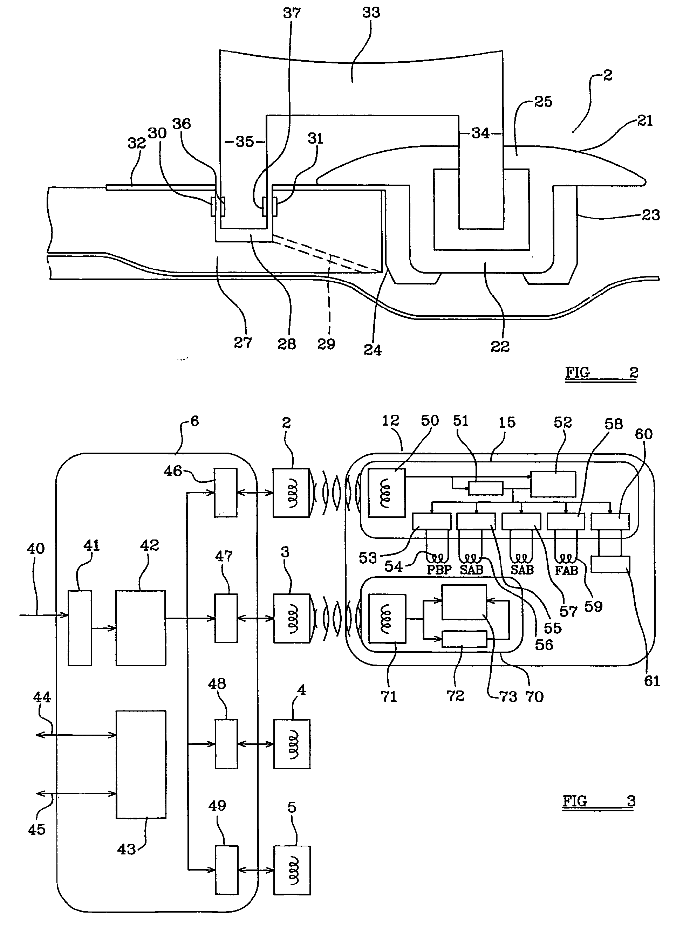

Referring now to Figure 2, a track element, such as the track element 2 is illustrated. The track element comprises an elongate rail 21 of a conventional design. The rail thus has a base 22 and two up-standing side-walls 23, 24, each of which carries an inwardly directed upper lip 25, 26. The lips are separated by a gap. Adjacent the rail a further element 27 is provided which defines, in its upper surface, a recess 28. The lower-most part of the recess 28 is provided with a drainage channel 29 so that any moisture forming within the recess 28 may drain away. The side-walls of the recess 28 are provided with coils having coil parts 30, 31 which form part of a communication system. The coils are provided evenly spaced-apart along the length of the recess 28.

The upper surface of the further element 27 may be provided with radiation shields 32 formed of an appropriate material to prevent spurious radiation from the coils, and further coils which will be described hereinafter, leaving the recess 28, or to prevent spurious radiation entering the recess 28 to generate currents within the coils.

Figure 2 illustrates a foot 33 carried by a seat The foot 33 has a part 34 thereof which is received within the rail 21. This part 34 may be of conventional design. The foot 33 has a second part 35 which is received within the recess 28. The second part 35 is provided with coils having coil parts 36, 37, which are aligned with the coils 30 and 31 formed in the side-walls of the recess 28.

The arrangement is such that whenever the seat is in one of the predetermined positions that the seat can occupy, the coil parts 36 and 37 mounted on the foot of the seat 33 are located adjacent selected coil parts 30, 31 provided within the side walls of the recess 28. The co-aligned coils form an inductive wireless link in a communication channel.

In the embodiment described, the communication elements 15, 16 and 17 are of a design as shown in Figure 2, and also the supplementary elements 18, 19 and 20 are also of the design as shown in Figure 2.

It is to be appreciated that the adjacent coil parts 30, 36 and 31, 37, may be used to form an inductive coupling between the track units 2, 3, 4 and 5 and the appropriate seats, providing a communication channel and a supplementary channel. The supplementary channel may be utilised to confirm the presence of the seat. The control unit 6, will therefore only recognise that a seat is present if communication is established with the seat through the communication channel, and the presence of the seat is confirmed by some communication through the supplementary channel. The control unit 6 may be determine the orientation of the seat and the size of the seat by determining the identity of the track which his providing communication through the communication channel, and the identity of the track which is providing communication through the supplementary channel.

Turning now to Figure 3, the control unit 6 is shown in somewhat more detail than heretofore. The control unit 6 receives power through a power input 40. The power input 40 is connected to an internal power supply 41 and power then passes to a central processing unit or controller 42. The controller 42 is connected to an inter-face 43 which is adapted either to receive signals from appropriate sensors, such as deceleration or crash sensors mounted on the vehicle, as exemplified by the line 44, or to transmit signals to actuate safety devices fixed within the vehicle, as exemplified by the line 45. The controller 42 is also, in this illustrated embodiment, connected to four separate inter-face units 46, 47, 48, 49, which each form an inter-face with one track unit. The inter-face 46, is thus shown diagrammatically as being connected to the track unit 2 which, as has been described above, incorporates a plurality of coils. The coils are shown diagrammatically within the track unit 2 in Figure 3, and are shown in a transmitting relationship with co-operating coils of a seat such as, for example, the seat 12. The inter-face 47 is shown associated with the track unit 3, having coils also in a transmitting relationship with co-operating coils of the seat 12, and similarly the inter-face 48 is shown associated with a track element 4 and the inter-face 49 is shown associated with the track unit 5.

The seat 12 is shown as having a communication element 15. The communication element 15 incorporates a coil arrangement 50 which would comprise the coil parts 36 and 37 provided on a foot 33 of the seat. The coils of the coil arrangement 50 are the coils of the seat in a transmitting relationship with the coils of the track unit 2. The coils of the coil arrangement 50 are connected to a power supply 51, which is a storage arrangement to store power. Thus power transmitted from the coils present in the rail unit 2, would be received by the coils of the coil arrangement 50 and passed to the power supply where the power would be stored either capacitively, or in a rechargeable battery. The communication element 15 includes a controller or micro-processor 52 which receives power from the power supply, and is connected to various inter-faces. A first inter-face 53 is a pre-tensioner inter-face which inter-faces with a squib 54 which can be actuated to deploy a pre-tensioner associated with a safety-belt mounted on the seat. An inter-face 55 inter-faces with a side air-bag and can activate a squib 56 which will deploy a side air-bag mounted on the seat. An inter-face 57 inter-faces with a second side air-bag and again can actuate a squib 58 to deploy the second side air-bag mounted on the seat.

A further inter-face 58 is provided which is a front air-bag inter-face. The front air-bag inter-face is associated with a sensor 59 provided on the seat and adapted to sense the weight of the occupant of the seat, or the position of the occupant of the seat and to generate a signal which can be utilised within the control arrangement of the front air-bag, to control the timing and/or rate of deployment of the front air-bag in dependence upon the weight and/or position of the occupant of the seat.

A further inter-face 60 is a buckle switch inter-face and is connected to a resistor 61 which goes short circuit when a seat-belt has the tongue thereof buckled into the buckle. Thus this inter-face can pass a signal representative of a buckled safety-belt to the control unit. Further interfaces may be provided associated with other diagnostic sensors.

When the seat is mounted on the track, the controller 42 within the control unit 6 will receive a signal from at least one of the interfaces, thus indicating the presence of the seat.

The seat 12 is shown as incorporating a supplementary element 70. The supplementary element 70 incorporates a coil arrangement 71, which, as with the coil arrangement 50, will be constituted by coil parts 36, 37 provided on a foot 33 of the seat. Again the coil arrangement is connected to a power supply 72, and the power supply is connected to a micro-processor or controller 73, The supplementary element 70, which is separate form the main communication channel, is such that on interrogation by an appropriate interrogation signal from the micro-processor 42 present within the control unit 6, through the communications link established between the inter-face 47 and the track unit 3, the micro-processor 73 within the supplementary element 70 will respond with an identification code.

Thus the processor 42 within the control unit 6 can determine, by sending appropriate interrogation signals, the identity of the seat and, from the identity of the track unit from which the response is received, as compared with the identity of the track unit from which the primary communications is established, can determine the size of the seat and the orientation of the seat.

It is to be appreciated that the control unit 6 will be adapted to generate an alarm signal if an inconsistent pattern of communication is established, e g. if communication is established through the main communication channel, but no confirming signal is provided from a supplementary element 70, or vice versa. The alarm signal may be used to actuate a visual and/or audible alarm, or may disable the vehicle.

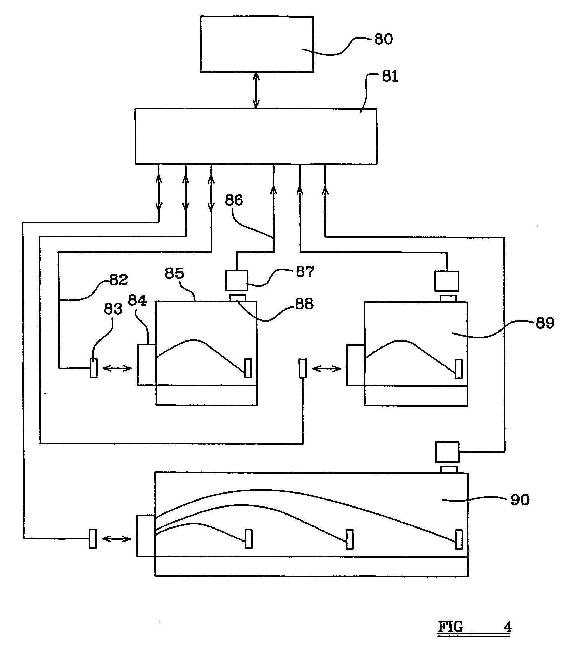

Figure 4 illustrates a further arrangement which is not part of the invention but is presented as an example useful in understanding the invention. Instead of using an active arrangement to establish a second communication channel with the seat, as in the embodiment of Figures 1 to 3, a passive arrangement is utilised to determine the presence of the seat.

Figure 4 illustrates an arrangement in which there is a central control unit 80 which is associated with a secondary or under-floor control unit 81. The under-flool control unit 81 is associated with a lead 82 extending to a transmitter/receiver 83 which can establish communication with a similar transmitter/receiver 84 provided on a first seat 85. The lead 82 is shown as a single wire, but may be incorporated in a track unit as generally described above. The transmitter/receivers of this embodiment may be coils of the type described above with reference to the embodiment of Figures 1 to 3, but may also comprise optical or infra-red transmitter/receivers.

The seat 85 is provided with various controllable safety devices of the type generally described above, and may also be provided with diagnostic arrangements and/or sensors, again generally as described above.

The seat 85 is also provided with a passive arrangement which can generate a signal to be provided to the control unit 81 to determine whether the seat is, or is not, mounted in position within the motor vehicle. The passive arrangement of this invention includes a lead 86 (which may be incorporate in a track unit) connected to the control unit which extends to a sensor 87 which is adapted to sense the presence of a sensed element 88 provided on the seat. The sensed element 88 may, in one embodiment, comprise a magnet, in which case the sensor 87 is a Hall-sensor, or a magnetically controlled switch. In an alternative embodiment, the transmitter 87 is a light-emitter/receiver and the sensor element 88 is a bar code, or, alternatively, a simple reflector.

In the arrangement shown in Figure 4, a second seat 89 is provided, again associated with a similar combination of a communications link and a passive system for sensing the presence of the seat, and a similar comment applies to a third seat 90 which is shown provided in this embodiment.

Whilst, in the arrangement of Figure 4, reference has been made to the use of a Hall switch which responds to a magnet, or a light actuated system which determines the presence of a bar code or reflector, it is to be appreciated that alternative forms of passive system could be utilised. For example, part of the seat, when in position, may engage and trips a micro-switch connected to the control unit 81, or alternatively part of the seat, when the seat is in position, may be received within a floor-mounted coil, thus altering the inductance of that coil.

In the described embodiments of the invention, a communication channel can be established between a removable seat and a control unit mounted within the vehicle, that communication channel permitting communication in at least one direction, and preferably in two directions. A separate arrangement is provided which enables the control unit to determine the presence of the seat, that separate arrangement comprising either a distinct communication channel, which again may permit communication in at least one direction, or some other sensor arrangement which is responsive to the presence of the seat in a predetermined position.

In the present Specification "comprise" means "includes or consists of" and "comprising" means "including or consisting of".

## Claims

1. A safety arrangement in a motor vehicle, the motor vehicle being provided with four separate elongate track units (2,3,4,5) each extending axially of the vehicle and at least one seat (12, 13, 14) which is removably mounted on two of said elongate track units (2, 3, 4, 5) within the vehicle, the at least one seat (12, 13, 14) having thereon at least one safety element in the form of a safety device which is an airbag or a safety-belt pre-tensioner being adapted to actuated in the event that an accident should occur, the safety arrangement incorporating a first communication channel having a part on the vehicle and a part on the seat (12, 13, 14) providing communication between a control (6) unit mounted on the vehicle to the or each safety element provided on the seat (12, 13, 14), the first communication channel comprising an inductive wireless link (30, 311, 36, 37) formed by first co-operating coils provided on the seat (50) and a first one of the track units (2,5) respectively, there being a first system for providing a signal to the control unit when the seat (12, 13, 14) is present in the vehicle, the first system being constituted by the first communication channel, and there being an independent system, comprising a supplementary communication channel which is separate from the seat part of the first communication channel, for determining the presence of the seat (12, 13, 14) in the vehicle and for providing a signal indicative of the presence of the seat in the vehicle to the control unit (6), the supplementary communication channel comprising an inductive wireless link (30, 31, 36, 37) formed by second co-operative coils provided on the seat (71) and a second one of the track units (3,4) respectively, and wherein the control unit (6) comprises means for determining the identity of the track which is providing communication through the communication channel, and the identity of the track which is providing communication through the supplementary channel.

2. An arrangement according to Claim 1, wherein at least one safety device on the seat (12, 13, 14) includes a diagnostic sensor (59), the diagnostic sensor (59) being adapted to pass a signal to the control unit (16) through the communication channel.

3. An arrangement according to any one of the preceding Claims wherein the seat (12, 13, 14) includes at least one sensor (59) adapted to sense the weight of an occupant of the seat.

4. An arrangement according to Claim 1 wherein the vehicle and seat are adapted for power to be transferred from the vehicle to the seat through the inductive coil (50).

5. An arrangement according to Claim 4 wherein the seat incorporates a storage arrangement (51) in which transferred power may be stored within the seat.

6. An arrangement according to any one of the preceding Claims incorporating an alarm signal generator adapted to be actuated if only one of said first system and said independent system provide a signal indicative of the presence of the seat.

## Patentansprüche

1. Sicherheitsanordnung in einem Kraftfahrzeug, wobei das Kraftfahrzeug mit vier separaten länglichen Schieneneinheiten (2, 3, 4, 5), die sich jeweils axial zu dem Fahrzeug erstrecken, sowie mindestens einem Sitz (12, 13, 14), der entnehmbar auf zwei der länglichen Schieneneinheiten (2, 3, 4, 5) innerhalb des Fahrzeugs angebracht ist, ausgerüstet ist, wobei an dem mindestens einen Sitz (12, 13, 14) mindestens ein Sicherheitselement in Form einer Sicherheitsvorrichtung angebracht ist, die ein Airbag oder Sicherheitsgurtstraffer ist, der so ausgelegt ist, dass er im Fall eines Unfalls betätigt wird, wobei die Sicherheitsanordnung einen ersten Kommunikationskanal umfasst, von dem sich ein Teil an dem Fahrzeug und ein Teil an dem Sitz (12, 13, 14) befindet und der eine Kommunikationsverbindung zwischen einer Steuereinheit (6), die an dem Fahrzeug an dem oder jedem Sicherheitselement angebracht ist, das an dem Sitz (12, 13, 14) vorgesehen ist, bereitstellt, wobei der erste Kommunikationskanal eine drahtlose Induktionsverbindung (30, 331, 36, 37) umfasst, die durch erste zusammenwirkende Spulen gebildet wird, die jeweils an dem Sitz (50) und einem ersten der Schienenelemente (2, 5) vorgesehen sind, wobei ein erstes System vorliegt, das der Steuereinheit ein Signal bereitstellt, wenn sich der Sitz (12, 13, 14) in dem Fahrzeug befindet, wobei das erste System von dem ersten Kommunikationskanal gebildet wird, und ein unabhängiges System vorliegt, das einen zusätzlichen Kommunikationskanal umfasst, der von dem Sitzteil des ersten Kommunikationskanals getrennt ist, um das Vorhandensein des Sitzes (12, 13, 14) in dem Fahrzeug zu ermitteln und ein Signal zu erzeugen, das der Steuereinheit (6) das Vorhandensein des Sitzes in dem Fahrzeug anzeigt, wobei der zusätzliche Kommunikationskanal eine drahtlose Induktionsverbindung (30, 31, 36, 37) umfasst, die durch zweite zusammenwirkende Spulen gebildet wird, die jeweils an dem Sitz (71) und einem zweiten der Schienenelemente (3, 4) vorgesehen sind, und wobei die Steuereinheit (6) Mittel zu Ermittlung der Identität der Schiene, die die Kommunikation durch den Kommunikationskanal bereitstellt, sowie der Identität der Schiene, die die Kommunikation durch den zusätzlichen Kanal bereitstellt, umfasst.

2. Anordnung nach Anspruch 1, wobei mindestens eine Sicherheitsvorrichtung an dem Sitz (12, 13, 14) einen Diagnosesensor (59) umfasst, wobei der Diagnosesensor (59) dafür ausgelegt ist, durch den Kommunikationskanal ein Signal zur Steuereinheit (16) zu senden.

3. Anordnung nach einem der vorhergehenden Ansprüche, wobei der Sitz (12, 13, 14) mindestens einen Sensor (59) umfasst, der dafür ausgelegt ist, das Gewicht eines Insassen des Sitzes zu erfassen.

4. Anordnung nach Anspruch 1, wobei das Fahrzeug und der Sitz dafür ausgelegt sind, dass durch die Induktionsspule (50) Strom von dem Fahrzeug auf den Sitz übertragen wird.

5. Anordnung nach Anspruch 4, wobei der Sitz eine Speicheranordnung (51) umfasst, in der übertragener Strom in dem Sitz gespeichert werden kann.

6. Anordnung nach einem der vorhergehenden Ansprüche, die einen Alarmsignalgenerator umfasst, der dafür ausgelegt ist, betätigt zu werden, wenn das erste System oder das unabhängige System ein Signal bereitstellen, das das Vorhandensein des Sitzes anzeigt.

## Revendications

1. Un agencement de sécurité dans un véhicule à moteur, le véhicule à moteur étant muni de quatre unités de rail allongées distinctes (2, 3, 4, 5) s'étendant chacune de façon axiale par rapport au véhicule et au moins un siège (12, 13, 14) qui est monté de façon amovible sur deux desdites unités de rail allongées (2, 3, 4, 5) à l'intérieur du véhicule, l'au moins un siège (12, 13, 14) ayant sur lui au moins un élément de sécurité sous la forme d'un dispositif de sécurité qui est un airbag ou un pré-tensionneur de ceinture de sécurité adapté pour être actionné dans l'éventualité où un accident se produit, l'agencement de sécurité incorporant un premier canal de communication ayant une partie sur le véhicule et une partie sur le siège (12, 13, 14) fournissant une communication entre une unité de commande (6) montée sur le véhicule à l'élément de sécurité ou chaque élément de sécurité fourni sur le siège (12, 13, 14), le premier canal de communication comportant une liaison sans fil inductive (30, 311, 36, 37) formée par des premières bobines coopérantes fournies sur le siège (50) et une première des unités de rail (2, 5) respectivement, un premier système étant présent pour fournir un signal à l'unité de commande quand le siège (12, 13, 14) est présent dans le véhicule, le premier système étant constitué du premier canal de communication, et un système indépendant étant présent, comportant un canal de communication supplémentaire qui est distinct de la partie de siège du premier canal de communication, pour déterminer la présence du siège (12, 13, 14) dans le véhicule et pour fournir un signal indicatif de la présence du siège dans le véhicule à l'unité de commande (6), le canal de communication supplémentaire comportant une liaison sans fil inductive (30, 31, 36, 37) formée par des deuxièmes bobines coopératives fournies sur le siège (71) et une deuxième des unités de rail (3, 4) respectivement, et où l'unité de commande (6) comporte un moyen pour déterminer l'identité du rail qui fournit une communication entre le canal de communication, et l'identité du rail qui fournit une communication par le biais du canal supplémentaire.

2. Un agencement selon la revendication 1, où au moins un dispositif de sécurité sur le siège (12, 13, 14) comprend un capteur de diagnostic (59), le capteur de diagnostic (59) étant adapté pour faire passer un signal à l'unité de commande (16) par le biais du canal de communication.

3. Un agencement selon n'importe laquelle des revendications précédentes où le siège (12, 13, 14) comprend au moins un capteur (59) adapté pour capter le poids d'un occupant du siège.

4. Un agencement selon la revendication 1 où le véhicule et le siège sont adaptés pour que de l'électricité soit transférée du véhicule au siège par le biais de la bobine inductive (50).

5. Un agencement selon la revendication 4 où le siège incorpore un agencement de stockage (51) dans lequel l'électricité transférée peut être stockée à l'intérieur du siège.

6. Un agencement selon n'importe laquelle des revendications précédentes incorporant un générateur de signal d'alarme adapté pour être actionné si seulement un dudit premier système et dudit système indépendant fournit un signal indicatif de la présence du siège.
